(19) Europäisches Patentamt

European Patent Office

Office européen des brevets

(11) **EP 1 140 608 B1**

(12) **FASCICULE DE BREVET EUROPEEN**

(45) Date de publication et mention
de la délivrance du brevet:
**17.09.2003 Bulletin 2003/38**

(21) Numéro de dépôt: **99958297.6**

(22) Date de dépôt: **10.12.1999**

(51) Int Cl.⁷: **B62D 65/00**

(86) Numéro de dépôt international:
**PCT/FR99/03095**

(87) Numéro de publication internationale:
**WO 00/035740 (22.06.2000 Gazette 2000/25)**

(54) **PROCEDE D'ORGANISATION DE LA PRODUCTION D'UNE LIGNE DE MONTAGE D'UNITES DIVERSEMENT EQUIPEES TELLES QUE DES VEHICULES AUTOMOBILES**

**VERFAHREN ZUR ORGANISATION DER PRODUKTION EINER MONTAGELINIE VON UNTERSCHIEDLICH AUSGESTATTETEN EINHEITEN WIE KRAFTFAHRZEUGEN**

**METHOD FOR ORGANISING A PRODUCTION ASSEMBLY LINE OF DIVERSELY EQUIPPED UNITS SUCH AS MOTOR VEHICLES**

(84) Etats contractants désignés:
**DE ES GB IT**

(30) Priorité: **16.12.1998 FR 9815891**

(43) Date de publication de la demande:
**10.10.2001 Bulletin 2001/41**

(73) Titulaire: **Renault s.a.s.**
**92100 Boulogne Billancourt (FR)**

(72) Inventeurs:
• **BRICARD, Hervé**
**F-31500 Toulouse (FR)**

• **COIFFIER, Jérémie**
**F-91370 Verrières le Buisson (FR)**
• **MAURIN, Elodie**
**F-75015 Paris (FR)**

(56) Documents cités:
• **PATENT ABSTRACTS OF JAPAN vol. 010, no. 365 (M-542), 6 décembre 1986 (1986-12-06) & JP 61 160369 A (TOYOTA MOTOR CORP), 21 juillet 1986 (1986-07-21)**

## Description

La présente invention est relative à un procédé d'organisation de la production d'une ligne de montage d'unités diversement équipées telles que des véhicules automobiles.

La fabrication d'une unité telle qu'un véhicule automobile comporte une phase de montage pendant laquelle on monte sur la caisse nue du véhicule tous les composants nécessaires à son assemblage complet: moteur, organes de direction, suspension, accessoires, etc.

Cet assemblage s'effectue tout au long d'une ligne de montage pouvant comprendre plusieurs centaines de postes dans lesquels les véhicules arrivent séparés les uns des autres par un temps de cycle prédéterminé pour subir des séquences d'opérations de montage susceptibles de varier d'un véhicule à un autre.

Classiquement, on analyse la viabilité d'une ligne de montage vis-à-vis d'un programme de fabrication donné à partir de la charge de travail moyenne de chaque poste.

On identifie les postes présentant une surcharge moyenne de travail, c'est-à-dire ceux dont la charge de travail moyenne dépasse le temps de cycle, et on transfère certaines opérations de montage initialement prévues à ces postes vers d'autres postes moins chargés.

Parmi les postes ainsi obtenus, certains sont susceptibles de présenter des surcharges *instantanées* de travail, c'est-à-dire des charges de travail *instantanées* qui dépassent le temps de cycle. Comme on va le comprendre à travers l'exemple qui suit, ces surcharges *instantanées* peuvent compromettre la viabilité d'un poste, et donc celle de la ligne de montage, si elles ne sont pas correctement gérées.

On imagine un poste de travail sur une ligne de montage dont le temps de cycle est de 1 minute: toutes les minutes, un nouveau véhicule arrive dans le poste, et défile en continu.

On suppose que l'agent de production attaché à ce poste ait à réaliser des opérations communes à tous les véhicules, et une opération assez longue spécifique aux véhicules équipés d'un dispositif de conditionnement d'air.

On suppose que la séquence d'opérations de montage pour les véhicules sans dispositif de conditionnement d'air dure 0,90 minute, et que la séquence d'opérations de montage pour les véhicules équipés d'un dispositif de conditionnement d'air dure 1,20 minute.

On suppose enfin que les véhicules sans dispositif de conditionnement d'air représentent 80% de la production, et que ceux équipés d'un dispositif de conditionnement d'air représentent 20% de la production.

Avec ces hypothèses, la charge de travail *moyenne* du poste est de:

$$0,90 \times 0,80 + 1,20 \times 0,20 = 0,96\text{min}$$

Cette charge *moyenne* est inférieure au temps de cycle de la ligne de montage, ce qui indique que le poste est viable en *moyenne.*

Cela dit, chaque véhicule avec dispositif de conditionnement d'air engendre une surcharge *instantanée* de 0,20 minute, et l'on voit que si, par exemple, trois véhicules équipés d'un dispositif de conditionnement d'air se succèdent, l'agent de production commencera à travailler sur le quatrième véhicule avec un retard de 0,60 minute, c'est-à-dire lorsque ce véhicule aura déjà traversé plus de la moitié du poste.

Pour réaliser toutes les opérations de montage nécessaires, l'agent de production devra sortir de plus en plus de son poste de travail, et finira par « couler », c'est-à-dire par buter contre les limites physiques de son poste. Il faudra alors arrêter l'ensemble de la ligne de montage pour lui permettre de se recaler correctement dans son poste.

Pour résoudre les problèmes liés aux surcharges *instantanées* des postes d'une ligne de montage, on avait jusqu'à présent recours à divers expédients. De manière tout à fait répandue, on augmentait les effectifs des postes susceptibles de présenter des surcharges *instantanées,* ce qui avait pour effet de détériorer notablement le rendement de la ligne de montage, et qui nécessitait d'adapter les effectifs aux différents programmes de fabrication.

La présente invention a pour but de fournir un procédé permettant d'absorber les surcharges *instantanées* tout en optimisant le rendement de la ligne de montage.

On atteint ce but de l'invention, ainsi que d'autres qui apparaîtront à la lecture de ce qui va suivre, avec un procédé d'organisation de la production d'une ligne de montage d'unités diversement équipées telles que des véhicules automobiles, cette ligne comportant une pluralité de postes dans lesquels lesdites unités arrivent séparées les unes des autres par un temps de cycle prédéterminé pour y subir des séquences d'opérations de montage pouvant varier d'une unité à une autre, comprenant les étapes consistant:

a) à établir un programme de fabrication d'unités,
b) à déterminer en fonction de ce programme, pour chaque poste, les différentes séquences d'opérations de montage à mettre en oeuvre, leurs durées et leurs taux d'occurrence,
c) à identifier, à partir de ces données, les postes présentant une surcharge *moyenne* de travail et à transférer certaines opérations de montage initialement prévues dans ces postes vers d'autres postes moins chargés,

ce procédé étant remarquable en ce qu'il comprend en outre les étapes consistant:

d) à identifier, parmi les postes ainsi obtenus, ceux qui sont susceptibles de présenter des surcharges *instantanées* de travail, c'est-à-dire ceux dont au moins une séquence d'opérations de montage présente une durée supérieure audit temps de cycle,

e) à définir, pour chacun des postes identifiés à l'étape d), des règles d'ordonnancement desdites séquences d'opérations de montage permettant d'absorber lesdites surcharges *instantanées* de travail,

f) à déduire de ces règles d'ordonnancement au moins une production possible desdites unités,

g) à comparer cette production audit programme et, en cas d'incompatibilité, à reprendre autant de fois qu'il est nécessaire les étapes précédentes en modifiant la répartition des opérations de montage entre les postes.

Suivant une autre caractéristiques du procédé selon l'invention, on définit lesdites règles d'ordonnancement pour chacun des postes identifiés à l'étape d) en projetant perpendiculairement le point correspondant audit programme de fabrication pour ces postes sur l'hyperplan de saturation de ces postes, puis en approchant les coordonnées du point ainsi projeté par des nombres rationnels immédiatement voisins.

Les règles d'ordonnancement ainsi obtenues définissent, pour chaque poste, les intervalles minimaux à respecter entre les véhicules susceptibles d'engendrer une surcharge *instantanée* de travail à ce poste, c'est-à-dire entre les véhicules qui doivent subir sur ce poste une séquence d'opérations de montage dont la durée dépasse le temps de cycle. Tant que l'on respecte ces intervalles minimaux, on est sûr de pouvoir absorber les surcharges *instantanées* de travail.

D'autres caractéristiques et avantages de la présente invention apparaîtront à la lecture de la description qui va suivre et à l'examen des figures du dessin annexé, dans lequel:

- la figure 1 est un graphe représentant les durées des séquences d'opérations de montage d'un poste donné,
- la figure 2 est un graphe mettant en évidence le fait qu'avec ces durées de séquences, le poste présente une surcharge *moyenne* de travail vis-à-vis d'un programme de fabrication donné,
- la figure 3 est un graphe représentant les durées des séquences d'opérations de montage de ce poste, après que les durées de deux d'entre elles aient été réduites,
- la figure 4 est un graphe mettant en évidence le fait qu'avec ces nouvelles durées de séquences, le poste ne présente plus de surcharge *moyenne* de travail vis-à-vis du programme de fabrication donné,
- la figure 5 est un détail de la partie V de la figure 4, sur lequel on voit notamment la manière dont on définit les règles d'ordonnancement des séquences d'opérations de montage du poste.

Sur ces figures, des références numériques identiques désignent des éléments identiques ou analogues.

Dans ce qui suit, on va décrire le procédé selon l'invention lorsqu'il est appliqué à l'organisation de la production d'une ligne de montage de véhicules automobiles. Il ne faut cependant pas perdre de vue le fait que ce procédé n'est pas limité à cette application, et qu'il pourrait servir, de manière plus générale, à organiser la production de toute ligne de montage permettant de fabriquer en série des unités diversement équipées.

Une première étape du procédé selon l'invention consiste à établir un programme de fabrication, c'est-à-dire à définir, pour une période donnée telle qu'une semaine, les différentes variantes de véhicules à produire, et leurs quantités respectives. Par variante, on désigne ici un ensemble de véhicules présentant le même équipement.

Une deuxième étape du procédé selon l'invention consiste à déterminer, en fonction de ce programme, pour chaque poste de la ligne de montage, les différentes séquences d'opérations de montage à mettre en oeuvre, leurs durées et leurs taux d'occurrence.

Une séquence d'opérations de montage est une série d'opérations de montage élémentaires destinées à être effectuées par un agent de production attaché à un poste donné. A titre d'exemple, ces opérations de montage élémentaires peuvent comprendre le vissage ou le soudage d'organes, ou bien le réglage de certains dispositifs (conditionnement d'air...).

Un poste donné peut comporter plusieurs séquences d'opérations de montage différentes, comme cela a été vu dans l'exemple présenté dans le préambule de la présente description. Dans ce cas, lorsqu'un véhicule arrive dans le poste, l'agent de production met en oeuvre sélectivement l'une de ces séquences d'opérations de montage, selon le type d'équipement à installer sur le véhicule.

Chaque séquence d'opérations de montage a une durée qui lui est propre, définie comme étant la somme des durées des opérations élémentaires de montage qui composent cette séquence.

Le programme de fabrication mentionné ci-dessus définit, pour chaque poste, le taux d'occurrence de chaque séquence d'opérations de montage, c'est-à-dire le nombre de fois où il faut mettre chaque séquence en oeuvre par rapport aux autres séquences du poste pour permettre la bonne exécution du programme de fabrication. Ce taux d'occurrence s'exprime en pourcentage.

Une troisième étape du procédé selon l'invention consiste à identifier les postes présentant une surcharge *moyenne* de travail, et à transférer certaines opérations de montage initialement prévues dans ces postes vers d'autres postes moins chargés.

La charge *moyenne* d'un poste peut être évaluée à l'aide de la formule suivante:

$$C = \Sigma T_i \theta_1,$$

où $T_i$ désigne la durée de la séquence d'opérations de montage i et $\theta_i$ son taux d'occurrence.

Si la charge *moyenne* d'un poste donné est supérieure au temps de cycle de la ligne de montage, c'est-à-dire à la durée séparant l'arrivée de deux véhicules consécutifs dans le poste, alors le poste n'est pas viable. Cela signifie que l'agent de production ne réussira jamais à mettre en oeuvre les différentes séquences d'opérations de montage dans les délais qui lui sont impartis. Il sera systématiquement en retard, et il faudra arrêter fréquemment la ligne de montage pour lui permettre de terminer ses tâches.

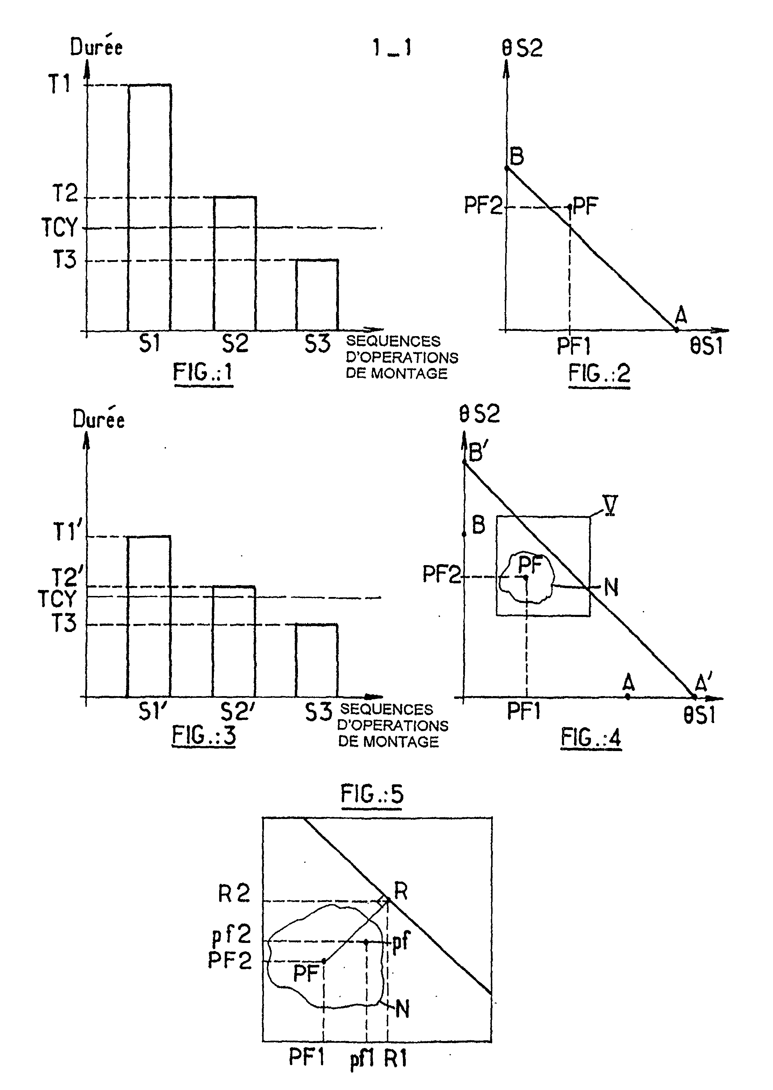

Une telle situation est illustrée par les figures 1 et 2 du dessin annexé, dans le cas particulier d'un poste comprenant trois séquences d'opérations de montage S1, S2 et S3.

On a représenté sur la figure 1 les durées respectives T1, T2, T3 de ces trois séquences. Dans cet exemple, deux S1, S2 de ces trois séquences ont des durées T1, T2 supérieures au temps de cycle TCY de la ligne de montage.

Le graphe de la figure 2 permet d'évaluer visuellement la viabilité *moyenne* du poste vis-à-vis d'un programme de fabrication donné.

Les axes des abscisses et des ordonnées de ce graphe portent les taux d'occurrence respectifs $\theta$S1, $\theta$S2 des séquences d'opérations de montage S1 et S2.

On place sur ce graphe une droite AB, dite « de saturation », correspondant au système d'équations suivant:

$$\begin{cases} \theta S1 + \theta S2 + \theta S3 = 1 \\ T1 \times \theta S1 + T2 \times \theta S2 + T3 \times \theta S3 = TCY \end{cases}$$

La première équation traduit simplement la complémentarité des différentes séquences d'opérations du poste vis-à-vis de sa production globale.

La deuxième équation traduit la saturation du poste, c'est à dire l'état de celui-ci lorsque sa charge moyenne de travail (voir ci-dessus) est égale au temps de cycle TCY de la ligne de montage.

L'équation de la droite AB découlant de ce système d'équations est la suivante:

$$(T1\text{-}T3) \times \theta S1 + (T2\text{-}T3) \times \theta S2 + (T3\text{-}TCY) = 0$$

On place également sur le graphe le point PF correspondant au programme de fabrication. Les coordonnées PF1 et PF2 de ce point représentent les taux d'occurrence des séquences S1 et S2 à satisfaire pour le poste en question afin de respecter le programme de fabrication.

Lorsque le point PF est au-dessus de la droite AB, comme c'est le cas sur la figure 2, cela signifie que la charge *moyenne* de travail du poste est supérieure au temps de cycle TCY de la ligne de montage, et donc que le poste n'est pas viable.

Pour viabiliser ce poste, il faut le décharger, c'est-à-dire transférer certaines opérations élémentaires de montage vers d'autres postes moins chargés.

Cette manipulation est illustrée par les figures 3 et 4, analogues respectivement aux figures 1 et 2.

Comme on peut le voir sur la figure 3, les durées des séquences S1 et S2 ont été réduites, de sorte que l'on obtient en fait deux nouvelles séquences S1' et S2' de durées T1' et T2' inférieures à T1 et T2.

Cette réduction de durée entraîne un déplacement de la droite AB de la figure 3 vers la position A'B' de la figure 4, de sorte que le point PF se retrouve sous cette droite.

Cela signifie que la charge moyenne de travail du poste est inférieure au temps de cycle TCY, et donc que le poste est viable *en moyenne*.

A l'issue de la troisième étape du procédé selon l'invention, on obtient une ligne de montage dont tous les postes sont viables en *moyenne*.

La quatrième étape du procédé selon l'invention consiste à identifier, parmi ces postes, ceux qui présentent une ou plusieurs séquences d'opérations de montage dont la durée est supérieure au temps de cycle TCY de la ligne de montage.

Comme on a pu le comprendre grâce au préambule de la présente description, ces postes sont susceptibles de présenter des surcharges instantanées de travail pouvant compromettre la viabilité de la ligne de montage.

La cinquième étape du procédé selon l'invention constitue une caractéristique essentielle de ce procédé. Elle consiste à déterminer, pour les postes identifiés lors de la quatrième étape du procédé, des règles d'ordonnancement des séquences d'opérations de montage dont la durée est supérieure au temps de cycle TCY, afin d'absorber les surcharges *instantanées* de travail.

L'objet de ces règles d'ordonnancement est d'indiquer l'ordre dans lequel les véhicules doivent arriver à un poste de travail, étant données les séquences d'opérations de montage qu'ils doivent y subir, afin d'absorber les surcharges *instantanées.*

Pour comprendre la manière dont on définit ces règles d'ordonnancement, on se reporte à la figure 5, laquelle est un détail de la figure 4.

Comme on peut le voir sur cette figure, on projette le point PF perpendiculairement sur la droite A'B'. On obtient ainsi un point R de coordonnées (R1; R2).

On choisit ensuite un couple de nombres rationnels immédiatement voisin du couple (R1; R2). Ce couple de nombres rationnels définit une règle d'ordonnancement.

Pour fixer les idées, supposons que le couple trouvé soit:

$$\left(\frac{1}{5}; \frac{2}{5}\right).$$

Cela signifie qu'il faut veiller à ce qu'au plus un véhicule sur cinq arrivant au poste en question soit destiné à subir la séquence d'opérations de montage S1', et à ce qu'au plus deux véhicules sur 5 arrivant à ce poste soient destinés à subir la séquence d'opérations de montage S2'.

Tant que l'on respecte cette règle, on est sûr que le poste peut absorber les surcharges *instantanées* causées par les séquences d'opérations de montage dont la durée dépasse le temps de cycle TCY.

A la différence d'autres règles d'ordonnancement qui auraient pu être obtenues en projetant le point PF non perpendiculairement sur la droite A'B', une règle obtenue en projetant perpendiculairement ce point sur cette droite présente un caractère de robustesse essentiel.

Pour comprendre cette notion, il faut se figurer qu'en réalité, les taux d'occurrence *instantanés* pf1, pf2 des séquences d'opérations de montage S1', S2' du poste mentionné ci-dessus varient autour des taux d'occurrence PF1, PF2 définis par le programme de fabrication.

Ces variations sont liées à tous les événements aléatoires pouvant survenir en amont du poste en question. Par exemple, il peut s'avérer nécessaire de faire certaines retouches sur un véhicule donné à la sortie de l'atelier de peinture, ce qui peut conduire à retarder son entrée dans la ligne de montage.

Ainsi, on peut représenter la production réelle du poste par un nuage de points N centré autour du point PF, ce nuage étant décrit instantanément par un point pf de coordonnées (pf1; pf2).

Comme on peut le voir sur la figure 5, le point R obtenu en projetant le point PF perpendiculairement sur la droite A'B' a des coordonnées qui « encadrent » celles de tous les points du nuage N. En d'autres termes, aucun des points instantanés pf n'a des coordonnées (pf1; pf2) supérieures à (R1; R2). Concrètement, cela signifie que l'on est sûr de pouvoir respecter la règle d'ordonnancement définie à partir du point R, indépendamment des variations *instantanées* aléatoires des taux d'occurrence des séquences S1', S2'.

Il faut bien comprendre que la règle d'ordonnancement ainsi définie fixe des limites supérieures à ne pas dépasser, et non pas des valeurs à respecter impérativement. Cela dit, il n'en demeure pas moins que plus les taux d'occurrence *instantanés* des séquences S1', S2' se rapprochent de R1, R2, meilleur est le rendement *instantané* du poste en question.

Dans le cas plus général d'un poste comprenant plus de trois séquences d'opérations de montage, on se place dans un espace ayant pour dimension le nombre de séquences qui dépassent le temps de cycle, et on projette le point PF sur un hyperplan de saturation, défini à partir d'un système d'équations analogue à celui exposé ci-dessus.

On rappelle ici que si l'espace susmentionné a pour dimension n, alors un hyperplan de cet espace est un sous-espace de dimension n-1.

Pour revenir à l'exemple exposé ci-dessus, la droite A'B' est un cas particulier d'hyperplan de dimension 1 dans un espace de dimension 2.

Une fois que l'on a défini, pour chaque poste susceptible de présenter des surcharges *instantanées*, une règle d'ordonnancement, une sixième étape du procédé selon l'invention consiste à déduire de ces règles au moins une production possible des véhicules.

Au cours de cette étape, on agrège l'ensemble des règles d'ordonnancement de tous les postes en tenant compte, notamment, des relations de dépendance qui peuvent exister entre certains postes.

Par exemple, si un poste ne peut pas recevoir plus de deux véhicules sur cinq comportant un certain équipement, et si le poste suivant ne peut pas recevoir plus d'un véhicule sur cinq comportant ce même équipement, alors la règle d'ordonnancement commune à ces deux postes est imposée par la plus contraignante des règles de chacun des deux postes, soit ici un véhicule sur cinq.

On aboutit ainsi, de proche en proche, à une production possible de véhicules, c'est à dire à des quantités de chaque variante effectivement productibles.

La septième et dernière étape du procédé selon l'invention consiste à comparer cette production possible au programme de fabrication établi lors de la première étape.

S'il y a compatibilité entre la production possible et le programme de fabrication, c'est-à-dire si la ligne de montage organisée conformément aux étapes précédentes permet effectivement de produire chaque variante dans les quantités requises par le programme de fabrication, alors on a trouvé une solution acceptable, c'est-à-dire une organisation permettant d'éviter les problèmes de surcharge de la ligne de montage tout en satisfaisant aux impératifs du programme de fabrication.

Il faut bien noter que le fait de s'affranchir des problèmes de surcharge revient en fait à optimiser le rendement de la ligne de montage pour un programme de fabrication donné. En effet, comme on l'a vu précédemment, l'absence de surcharges permet de faire fonctionner la ligne de montage en continu sans avoir à faire appel à des sureffectifs.

En cas d'incompatibilité entre la production possible et le programme de fabrication, on reprend autant de fois qu'il est nécessaire les étapes précédentes en modifiant la répartition des opérations de montage entre les postes.

Etant donné le caractère itératif du procédé selon l'invention et le volume important de données à traiter, ce procédé est particulièrement destiné à être mis en oeuvre par des moyens informatiques.

**Revendications**

1. Procédé de fabrication d'unités diversement équipées sur une ligne de montage telles que des véhicules automobiles, cette ligne comportant une pluralité de postes dans lesquels lesdites unités arrivent séparées les unes des autres par un temps de cycle (TCY) prédéterminé pour y subir des séquences d'opérations de montage pouvant varier d'une unité à une autre, comprenant les étapes consistant:

   a) à établir un programme de fabrication d'unités,
   b) à déterminer en fonction de ce programme, pour chaque poste, les différentes séquences d'opérations de montage à mettre en oeuvre (S1, S2, S3), leurs durées (T1, T2, T3) et leurs taux d'occurrence ($\theta S1$, $\theta S2$, $\theta S3$),
   c) à identifier, à partir de ces données, les postes présentant une surcharge *moyenne* de travail et à transférer certaines opérations de montage initialement prévues dans ces postes vers d'autres postes moins chargés,
   **caractérisé en ce qu'**il comprend en outre les étapes consistant:
   d) à identifier, parmi les postes ainsi obtenus, ceux qui sont susceptibles de présenter des surcharges *instantanées* de travail, c'est-à-dire ceux dont au moins une séquence d'opérations de montage (S1', S2') présente une durée supérieure audit temps de cycle (TCY),
   e) à définir, pour chacun des postes identifiés à l'étape d), des règles d'ordonnancement desdites séquences d'opérations de montage (S1', S2') permettant d'absorber lesdites surcharges *instantanées* de travail,
   f) à déduire de ces règles d'ordonnancement au moins une production possible desdites unités,
   g) à comparer cette production audit programme et, en cas d'incompatibilité, à reprendre autant de fois qu'il est nécessaire les étapes précédentes en modifiant la répartition des opérations de montage entre les postes,
   h) à fabriquer lesdites unités selon les règles d'ordonnancement déduites des étapes a) à g).

2. Procédé selon la revendication 1, **caractérisé en ce qu'**on définit lesdites règles d'ordonnancement pour chacun des postes identifiés à l'étape d) en projetant perpendiculairement le point (PF) correspondant audit programme de fabrication pour ces postes sur l'hyperplan de saturation (A'B') de ces postes, puis en approchant les coordonnées (R1, R2) du point ainsi projeté (R) par des nombres rationnels immédiatement voisins.

3. Procédé selon la revendication 2, **caractérisé en ce qu'**on utilise, pour chacun des postes identifiés à l'étape d), les rapports exprimés par lesdits nombres rationnels pour définir les intervalles minimaux à respecter entre les véhicules devant subir sur ces postes des séquences d'opérations de montage (S1', S2') dont la durée dépasse ledit temps de cycle (TCY).

**EP 1 140 608 B1**

**Patentansprüche**

1. Verfahren zur Fertigung von unterschiedlich ausgestatteten Einheiten, beispielsweise von Kraftfahrzeugen in einer Montagelinie, die eine Vielzahl an Stationen aufweist, in welche die Einheiten im Abstand einer vorbestimmten Taktzeit (TZ) eintreffen, um dort einem Ablauf von Montagevorgängen unterworfen zu werden, die je nach Einheit unterschiedlich sein können, wobei dieses Verfahren aus den folgenden Schritten besteht:

   a) ein Fertigungsprogramm für die Einheiten erstellen,
   b) aufgrund dieses Programms, für jede Station die verschiedenen Abläufe der auszuführenden Montagevorgänge (S1, S2, S3), ihre Dauer (T1, T2, T3) und die Häufigkeit ihres Vorkommens ($\theta$S1, $\theta$S2, $\theta$S3) bestimmen,
   c) aufgrund dieser Daten, feststellen, welche Stationen eine *mittlere* übermäßige Auslastung aufweisen, und einige, ursprünglich für diese Stationen bestimmte Montagevorgänge auf andere, weniger ausgelastete Stationen übertragen,
   **dadurch gekennzeichnet, dass** es außerdem die folgenden Schritte umfasst:
   d) unter den entstandenen Stationen, feststellen, welche Stationen einer *momentanen* übermäßigen Auslastung ausgesetzt sein könnten, das heißt, welche wenigstens einen Ablauf von Montagevorgängen (S1', S2') aufweisen, dessen Dauer die Taktzeit (TZ) überschreitet,
   e) für jede in Schritt d) festgestellte Station Regeln zur Einteilung der Abläufe von Montagevorgängen (S1', S2') festlegen, mit denen die *momentanen* übermäßigen Auslastungen gepuffert werden können,
   f) aus diesen Regeln zur Einteilung der Abläufe wenigstens eine mögliche Produktion dieser Einheiten ableiten,
   g) diese Produktion mit dem Programm vergleichen und, falls sie nicht übereinstimmen, so häufig wie nötig die vorgenannten Schritte wiederholen und dabei die Aufteilung der Montagevorgänge auf die Stationen ändern,
   h) die Einheiten nach den aus den Schritten a) bis g) abgeleiteten Einteilungsregeln fertigen.

2. Verfahren nach Anspruch 1, **dadurch gekennzeichnet, dass** die Einteilungsregeln für jede in Schritt d) festgestellte Station dadurch festgelegt werden, dass der dem Fertigungsprogramm für diese Stationen entsprechende Punkt (FP) senkrecht auf eine Hyperebene (A', B') der Sättigung dieser Stationen projiziert wird und dann die Koordinaten (R1, R2) des so projizierten Punktes (R) durch die unmittelbar nächsten rationalen Zahlen angenähert werden.

3. Verfahren nach Anspruch 2, **dadurch gekennzeichnet, dass** für jede in Schritt d) festgestellte Station die durch die rationalen Zahlen ausgedrückten Verhältnisse verwendet werden, um die Mindestabstände festzulegen, die zwischen den Fahrzeugen einzuhalten sind, die in diesen Stationen Abläufen von Montagevorgängen (S1', S2') unterworfen werden, deren Dauer die Taktzeit (TZ) überschreitet.

**Claims**

1. Method for fabrication of differently equipped units on an assembly line, such as automotive vehicles, said line comprising a plurality of stations at which said units arrive separated from one another by a predetermined cycle time (TCY) in order to undergo sequences of assembly operations there that can very from one unit to another, comprising steps consisting of:

   a) establishing a programme for fabrication of units

   b) according to said programme, determining for each station the different sequences of assembly operations to be implemented (S1, S2, S3), their duration (T1, T2, T3) and their rate of occurrence ($\theta$S1, $\theta$S2, $\theta$S3),

   c) identifying from these data the stations having an *average* excess workload and transferring certain assembly operations initially provided at these stations to other, less busy, stations,
   **characterised in that** it further comprises steps consisting of:

   d) identifying, among the stations thus set up, those that have a tendency to have *brief* excess workloads, that is to say those where at least one sequence of assembly operations (S1', S2') has a duration greater than said cycle time (TCY),

   e) defining for each of the stations identified at d) the organisational rules for said sequences of assembly operations (S1', S2' ) allowing said *brief* excess workloads to be absorbed,

f) deducing from said organisational rules at least one possible production system for said units,

g) comparing this production system to said programme and, where these are incompatible, repeating the preceding steps as many times as necessary, modifying the distribution of the assembly operations between the stations,

h) fabricating said units according to the organisational rules derived at steps a) to g).

2. Method according to claim 1, **characterised in that** said organisational rules are defined for each of the stations identified at step d) by projecting perpendicularly the point (PF), corresponding to said fabrication programme for said stations, onto the hyperplane of saturation (A'B') of said stations, then approximating the coordinates (R1, R2) from the point thus projected (R ) by immediately adjacent rational numbers.

3. Method according to claim 2, **characterised in that** for each of the stations identified at step d) the ratios expressed by said rational numbers are used to define the minimum intervals to be maintained between the vehicles that have to undergo sequences of assembly operations (S1', S2') at these stations, the duration of which exceeds said cycle time (TCY).

FIG.:1

FIG.:2

FIG.:3

FIG.:4

FIG.:5